**Europäisches Patentamt**

**European Patent Office**

**Office européen des brevets**

(11) Veröffentlichungsnummer: **0 154 868**
**A2**

(12) ## EUROPÄISCHE PATENTANMELDUNG

(21) Anmeldenummer: 85101981.0

(22) Anmeldetag: 22.02.85

(51) Int. Cl.⁴: **B 01 D 3/00**

(30) Priorität: 24.02.84 DE 3406825
12.04.84 DE 3413892

(43) Veröffentlichungstag der Anmeldung: 18.09.85
Patentblatt 85/38

(84) Benannte Vertragsstaaten: AT BE CH DE FR GB IT LI LU NL SE

(71) Anmelder: Multimatic Maschinen GmbH. & Co.,
Bismarckstrasse 4-10, D-4520 Melle (DE)

(72) Erfinder: Rannow, Michael, Dipl.-Chem.,
Wendelinusstrasse 6, D-5461 St. Katharinen (DE)

(74) Vertreter: Lorenz, Eduard et al, Rechtsanwälte Eduard
Lorenz - Bernhard Seidler Margrit Seidler - Dipl.-Ing.
Hans-K. Gossel Dr. Ina Phillpps - Dr. Paul B. Schäuble Dr.
Siegfried Jackermeier,
Widenmayerstrasse 23 D-8000 München 22 (DE)

(54) Vorrichtung zum Destillieren verschmutzter Lösemittel oder dergleichen.

(57) Eine Vorrichtung zum Destillieren verschmutzter Lösemittel und Lösungsmittelgemische, vorzugsweise verschmutzter Lösemittel von Chemischreinigungsvorrichtungen, besteht aus einem Zwangsumlaufverdampfer, in den eine das verschmutzte und in einem Wärmetauscher erwärmte Lösemittel zuführende Leitung, die in ihrem Mündungsbereich mit einem Drosselventil versehen ist, mündet, und der in seinem oberen Bereich eine den Dampf über einen Brüdenkompressor in einen Kondensator führende Leitung und in seinem unteren Bereich eine das Lösemittel abziehende und über eine Pumpe in den Wärmetauscher einspeisende Leitung aufweist, aus einem Wasserabscheider und aus einer das verschmutzte Lösemittel zuführenden und einer das Destillat abführenden Leitung. Um die Destillation bei niedrigen Temperaturen und mit einem geringen Anteil von Lösemittel am Destillierschlamm durchführen zu können, besteht der Brüdenkompressor aus einer trockenumlaufenden Vakuumpumpe ohne Einlaß- und Auslaßventile mit interner Verdichtung. Die Vakuumpumpe weist zwei gleiche Rotoren mit zahnförmigen Profilen auf, die berührungslos in einem Gehäuse mit der Form zweier ineinandergreifender Zylinder gegeneinander abrollen. Das Gehäuse der Vakuumpumpe ist mit Einspritzdüsen versehen, die auf die Druckseiten der Rotoren zur Kühlung Destillat in einer Menge spritzen, die noch während der Kompression verdampft.

ACTORUM AG

0154868
22.02.1985
79 580  G-die

**Multimatic Maschinen GmbH & Co.,
4520 Melle**

---

**Vorrichtung zum Destillieren verschmutzter
Lösemittel oder dergleichen**

---

Die Erfindung betrifft eine Vorrichtung zum Destillieren
verschmutzter Lösemittel und Lösemittelgemische nach dem Oberbegriff des Patentanspruchs 1.

Bekannte Destilliervorrichtungen müssen mit Temperaturen betrieben werden, die über der Siedetemperatur des Lösemittels liegen.
Wird als Lösemittel beispielsweise Perchloräthylen verwendet,
dessen Siedetemperatur 121°C beträgt, muß bei der konventionellen Destillation das Lösemittel mindestens auf diese Temperatur aufgeheizt werden. Darüberhinaus muß zur Bildung der Dampfblasen noch die statische Höhe des Sumpfes überwunden werden sowie die Siedepunktverschiebung aufgrund der Anreicherung des Rückstands. Um die Blasendestillation aufrecht zu erhalten, ist eine wesentlich höhere Beheizungstemperatur erforderlich. Da aber die Zersetzungstemperatur von Perchloräthylen etwa 150°C beträgt, kann bei den Chemischreinigungsvorrichtungen eine Beheizungstemperatur nicht höher gewählt werden. Bei diesen hohen Beheizungstemperaturen erfolgt eine Zersetzung von z.B. Aminverbindungen, die unangenehme Gerüche des Destillats zur Folge haben. Weiterhin läßt sich den Lösemittelrückständen trotz ihres Aufheizens bis auf etwa 150°C das Lösemittel nur bis auf einen Restgehalt von 40 - 60% entziehen. Dabei werden die aus Ölen, Wachsen und Harzen und dergleichen bestehenden Destillationsrückstände vercrackt und polymerisiert, d.h. sie verfestigen sich und setzen sich auf den Heizflächen fest. Das Beseitigen dieser polymerisierten Destillationsrückstände mit einem Lösemittelanteil von ca. 50% ist aufwendig und gesundheitsschädlich. Werden den destillierenden Lösemitteln wie Perchloräthylen Wasseranteile zugemengt, kommt es zu heftiger Schaumbildung und damit verbundenen Destillationsproblemen. Darüberhinaus verdoppeln sich die Betriebskosten bei einer Zugabe von nur 10 Gew.% Wasser zum Lösemittelgemisch.

Eine gewisse Verbesserung schaffen aus der Praxis bekannte Destillieranlagen der eingangs angegebenen Art, bei denen das verschmutzte Lösemittel in einem Wärmetauscher durch Fremddampf aufgeheizt und dann in einen Oberflächenverdampfer geleitet wird. Auf diese Weise lassen sich die Wärmetauschflächen theoretisch beliebig groß bauen. Durch die Verminderung der Wärmedurchgänge pro Quadratzentimeter und die Verkürzung der Verweilzeit an der Wärmetauschfläche wird die thermische Zersetzung des Rückstands vermindert, dennoch muß die Heiztemperatur über der Siedetemperatur des zu destillierenden Lösemittels liegen. Eine wesentliche Abreicherung des Lösemittelanteils ist so nicht möglich und bedingt ein zweites herkömmliches Destillationssystem zum Ausdestillieren des Rückstands mit den bekannten Nachteilen und Problemen.

Bei den bekannten Destillieranlagen muß sowohl Heizenergie zum Verdampfen der Lösemittel aufgewendet werden als auch Kühlenergie, um die Dämpfe wieder zu kondensieren und abzukühlen, d.h. um die vorher hineingesteckte Energie wieder zu vernichten.

Aufgabe der Erfindung ist es daher, die Destilliervorrichtung nach dem Oberbegriff des Patentanspruchs 1 derart zu verbessern, daß sich die Destillation bei niedrigeren Temperaturen und mit einem verringerten Anteil von Lösemittel am Destillierschlamm durchführen läßt.

Erfindungsgemäß wird diese Aufgabe durch die kennzeichnenden Merkmale des Patentanspruchs 1 gelöst.

Die erfindungsgemäße Vorrichtung weist eine Vakuum-Destillationsanlage mit einem Oberflächenverdampfer auf, vorzugsweise einem Zyklon-Verdampfer, aus dem heraus die zu verdampfenden Lösemittel mit einer Umwälzpumpe abgezogen und über einen Wärmetauscher wieder in den Verdampfer zugeführt werden. Der Verdampfer kann dabei so ausgebildet sein, daß er gleichzeitig auch als Blasenverdampfer genutzt werden kann. Auf der Gegenseite des Wärmetauschers werden die mit einer trockenverdichtenden Vakuumpumpe aus dem Verdampfer abgezogenen und verdichteten sowie aufgezeigten Brüden kondensiert. Dem System kann ein Gegenstrom-Wärmetauscher zugeordnet sein, der die zulaufenden Lösemittel auf Siedetemperatur bringt und das ablaufende Destillat rückkühlt.

Bei der erfindungsgemäßen Vorrichtung wird die zum Verdampfen der Lösemittel notwendige Energie aus der Kondensation der Brüden gewonnen, so daß gleichzeitig keine zusätzliche Kühlenergie benötigt wird. Auch bei der Destillation von Wassergemengen azeotrop siedender Lösemittel entstehen keine zusätzlichen Energiekosten. Die Destillation kann bei so niedrigen Temperaturen durchgeführt werden, daß die Zersetzung des Rückstandes sowie des Lösemittels ausgeschlossen ist und dennoch der Lösemittelanteil im Rückstand weiter abgereichert werden kann, als dies bei den herkömmlichen Systemen möglich ist.

Durch die Verdampfung des Lösemittels im Vakuum wird die Verdampfungstemperatur des Lösemittels beträchtlich herabgesetzt, sowie die Trennschärfe der Lösemittelkomponenten verbessert. Die Temperatur des zum Heizen benutzten Lösungsmitteldampfes steht im Gleichgewicht mit der durch die Anreicherung des Rückstandes sich verschiebenden Verdampfungstemperatur, so daß es zu keiner Überhitzung kommen kann und somit aufgrund der abgesenkten Temperaturen auch zu keiner pyrolytischen Zersetzung.

Die Vakuum-Destillation von Lösemitteln oder Lösemittelgemischen mit direkter Brüdenverdichtung zum Beheizen des Verdampfungsprozesses ist an sich bekannt. Sie konnte jedoch bei vielen Lösemitteln und insbesondere bei Chemischreinigungsvorrichtungen bisher nicht realisiert werden, weil die Lösemittel die in üblichen Vakuumpumpen erforderlichen Schmiermittel und Dichtungen angreifen bzw. anlösen. Erfindungsgemäß wird daher die Vakuum-Destillation mit einr trockenlaufenden Vakuumpumpe mit interner Verdichtung durchgeführt, bei der von dem Lösemittel bzw. dem Lösemitteldampf angreifbare Schmiermittel nicht vorhanden sind. Die notwendige Kühlung wird durch Einspritzen von flüssigem Lösemittel während einer bestimmten Kompressionsphase vorgenommen.

Nach der Erfindung ist vorgesehen, daß die Vakuumpumpe zwei gleiche Rotoren mit zahnförmigen Profilen, die berührungslos in einem Gehäuse mit der Form zweier ineinandergreifender Zylinder gegeneinander abrollen, und keine Einlaß- und Auslaßventile
aufweist. Eine allerdings als Verdichter arbeitende Pumpe dieses
Typs stellt beispielsweise die Firma Mannesmann-Demag mit der
Typenbezeichnung DK 110-2 RS her. Verdichter dieser Art sind
auch unter der Bezeichnung Northey-Drehkolbenpumpen bekannt. Um
als Vakuumpumpen in der erfindungsgemäßen Form eingesetzt werden
zu können, müssen die Rotoren derartiger Pumpen jedoch abweichende Radien aufweisen oder höhere Drehgeschwindigkeiten haben, um
die bei Vakuumpumpen auftretenden Probleme der dynamischen Dichtung bewältigen zu können, sowie eine Kühlung besitzen, um das
Überhitzen der Lösemitteldämpfe zu vermeiden.

Bei der erfindungsgemäßen Ausbildung der Pumpe ist vorgesehen,
daß die Vakuum-Pumpe mit Einspritzdüsen versehen ist, so daß während der Kompression auf die Druckseite der Rotoren zur Kühlung
Destillat eingesetzt wird. Dieses Destillat wird in einer Menge
eingespritzt, daß es vollständig verdampft. Durch diese Art der
Kühlung wird eine Überhitzung der Dämpfe vermieden. Auf diese
Weise wird nicht nur verhindert, daß sich die Lösemittel zersetzen, sondern es kann auf eine Kühlstrecke im Kondensator
verzichtet werden. Die Gefahr einer Dampfsperre durch die Überhitzung der Kolben ist auf diese Weise ebenfalls ausgeschlossen.
Die Einspritzung des Destillats ist so zu gestalten, daß dieses
noch während der Kompression vollständig verdampft und die Kolben damit trocken sind, wenn sie mit dem Schöpfraum in Verbindung stehen.

Aus der DE-OS 28 32 726 ist es bekannt, als Brüden-Verdichter
eine "trockenverdichtende" Vakuumpumpe zu verwenden. Bei dieser
handelt es sich jedoch nicht um eine "trockenlaufende" Vakuumpumpe, wie sie erfindungsgemäß Verwendung findet.

Die nach der DE-OS 28 32 726 vorgesehenen Vakuumpumpen sind
ölgedichtet. Ölgedichtete Vakuumpumpen sind aber für die

0154868

erfindungsgemäße Vorrichtung nicht geeignet. Die aus der DE-OS
28 32 726 bekannte Vakuumdestillation von Lösemitteln konnte
bisher bei Chemischreinigungsvorrichtungen nicht realisiert
werden, weil die Lösemittel die für die Vakuumpumpen erforderlichen Schmier- und Dichtungsmittel angreifen und anlösen.

Erfindungsgemäß wird daher die Vakuumdestillation mit einer
trockenlaufenden Vakuumpumpe durchgeführt, bei der von dem Lösemittel bzw. dem Lösemitteldampf angreifbare Schmier- und Dichtmittel nicht vorhanden sind.

Aus der DE-OS 32 44 099 ist eine mindestens zweistufige Vakuumpumpe bekannt, von der eine Stufe durch eine sogenannte Northey-
Drehkolbenpumpe gebildet ist.

Einstufig konnte jedoch die Vakuumpumpe nach der DE-OS 32 44 099
nicht ausgebildet werden, weil dann unbeherrschbare Temperaturprobleme durch eine Überhitzung der Pumpe auftreten würden.

Nach der Erfindung ist die Verwendung einer einstufigen Northey-
Drehkolbenpumpe als Vakuumpumpe dadurch ermöglicht worden, daß
eine besondere Kühlung dieser Pumpe durch das eingespritzte
Destillat vorgesehen ist.

In erfindungsgemäßer Ausgestaltung ist vorgesehen, daß der Kondensator dadurch den Wärmetauscher bildet, daß in diesem Rohrschlangen für das verschmutzte Lösemittel verlegt sind. Durch
diese Ausgestaltung kann auf eine Fremdbeheizung des zu destillierenden verschmutzten Lösemittels verzichtet werden, weil die
Verdampfungswärme aus der freiwerdenden Kondensationswärme
entnommen wird. Die Verlustleistung des Systems wird durch die
Verdichtungsleistung der Vakuumpumpe ersetzt. Die für die Vakuumpumpe benötigte Antriebsenergie beträgt nur ein Bruchteil der
sonst notwendigen Verdampfungsenergie, so daß der Einsatz der erfindungsgemäßen Destillationsvorrichtung eine so große Energie-
einsparung mit sich bringt, daß sich der insbesondere durch die
Pumpe verursachte erhöhte Investitionsaufwand in relativ kurzer
Zeit amortisiert.

In der weiteren Ausgestaltung der Erfindung ist vorgesehen, daß
das zulaufende Lösemittel direkt in den Verdampferfilm eingesprüht wird. Hierdurch kommt es zu einer Flashverdampfung, die
es ermöglicht, auch areotropsiedende Lösemittel-Wasser-Gemische
zu destillieren, die sich wegen der Schaumbildung in herkömmlichen Destillieranlagen nur unter Schwierigkeiten destillieren
lassen. Bei der Destillation azeotropsiedener Lösemittel-Wasser-
Gemische wird der Umstand ausgenutzt, daß die Gemische einen
tieferen Siedepunkt haben als jede der das Gemisch bildenden
Komponenten. So bildet beispielsweise Wasser mit Perchloräthylen
ein azeotropes Gemisch, das 84 Gew.% Perchloräthylen und 16
Gew.% Wasser enthält. Bei Normaldruck siedet dieses azeotrope
Gemisch bei 87°C. Je weiter man sich dem Azeotroppunkt nähert,
desto geringer ist die Verdampfungstemperatur und damit die Temperaturbelastung des Rückstandes.

Zweckmäßigerweise wird der Verdampfer als Zyklonverdampfer ausgebildet, d.h. das im Umlauf befindliche Lösemittel wird über
eine Drossel eingespricht, so daß eine Trombe mit hoher Umlaufgeschwindigkeit und dünner Filmbildung entsteht.

In weiterer Ausgestaltung der Erfindung ist vorgesehen, daß der
Zwangsumlaufverdampfer mit dem Kondensator durch eine Schleppluftleitung verbunden ist. Durch die Schleppluft wird der Totaldruck im Verdampfer über dem Siedepunkt des Lösemittels gehalten
so daß die Verdampfung bei einem geringeren Unterdruck durchgeführt werden kann.

Eine weitere Energie-Einsparung kann dadurch erreicht werden, daß das ablaufende Kondensat und das zugeführte Lösemittel über einen Gegenstrom-Wärmeaustauscher geführt werden. Auf diese Weise wird die notwendige Entropie zum Aufheizen der zugeführten Lösemittel auf Verdampfungstemperatur aus dem ablaufenden Kondensat gewonnen.

Zweckmäßigerweise ist der Behälter des Zwangsumlaufverdampfers mit einer Zusatzheizung versehen, die nicht nur beim Anfahren der Anlage zweckmäßig ist, sondern auch das Ausdestillieren des Lösemittelschlammes verbessert. Hierzu wird der Lösemittelkreislauf unterbrochen und die Zusatzheizung eingeschaltet, so daß über die Vakuumpumpe aus dem Lösemittelschlamm das Lösemittel bis auf einen geringen Restgehalt ausdestilliert werden kann. Durch die Vakuumdestillation bleibt der Lösemittelschlamm in unvercrackter und polymerisierter Form fließfähig, so daß er ohne Schwierigkeiten aus dem Verdampfer herausgefördert werden kann.

Ein Ausführungsbeispiel der Erfindung wird nachstehend anhand der Zeichnung näher erläutert. In dieser zeigt

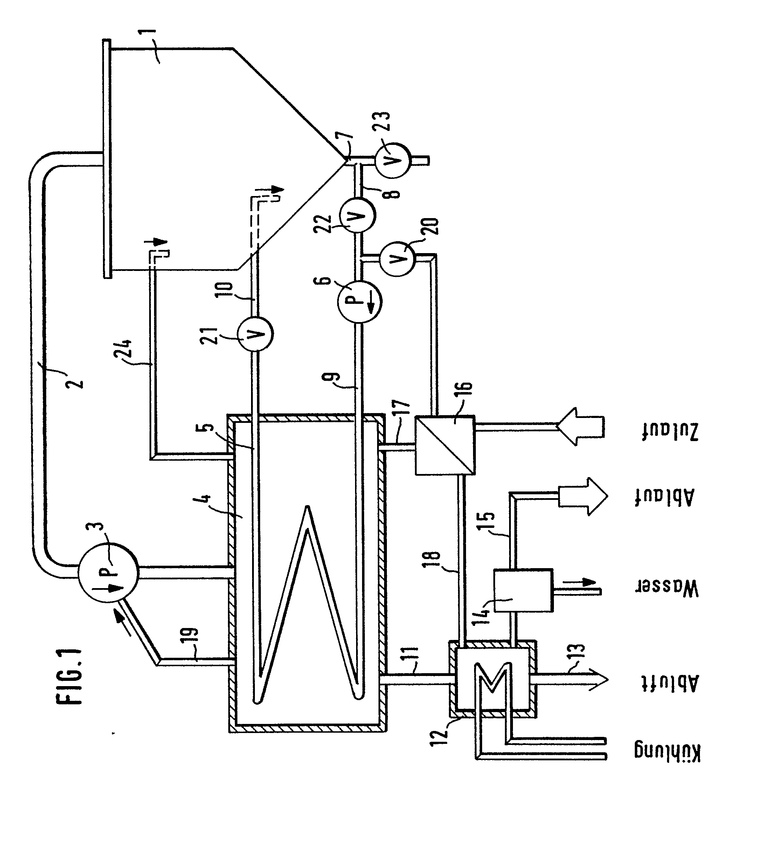

Fig. 1   die Destilliervorrichtung in schematischer Darstellung,

Fig. 2, 3 und 4
         die Vakuumpumpe im Vertikalschnitt, im Horizontalschnitt und in einer Stirnansicht und

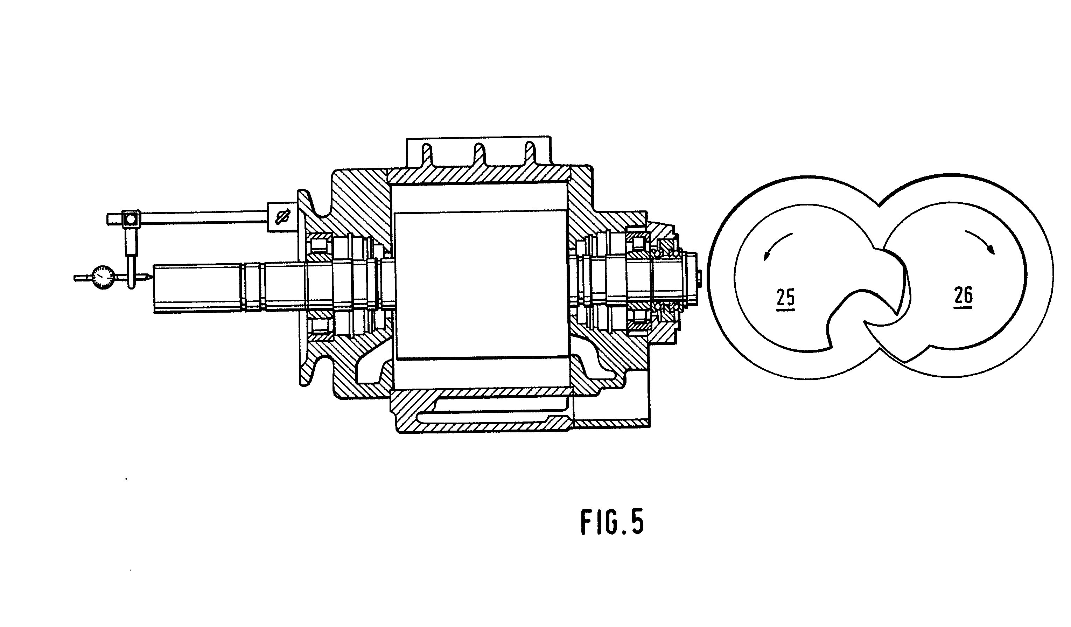

Fig. 5   einen Schnitt durch das Pumpengehäuse mit Rotoren in schematischer Darstellung.

Die in Fig. 1 schematisch dargestellte Destilliervorrichtung besteht aus einem Zwangsumlaufverdampfer 1 mit einem zyklonförmigen Gehäuse, dessen oberes Ende über die Leitung 2 mit der Vakuumpumpe 3 verbunden ist. Die Vakuumpumpe 3 fördert die aus dem Zwangsumlaufverdampfer 1 abgesaugten Brüden in den Wärmetauscher 4. In dem Wärmetauscher 4 sind die das verschmutzte Lösemittel führenden Rohre 5 verlegt. Das vordestillierte Lösemittel wird von der Pumpe 6 aus dem unteren Bereich des Zwangsumlaufverdampfers 1 über die Leitungen 7, 8 angesaugt und über die Leitung 9 in den Wärmetauscher 4 gefördert. Über die Leitung 10 wird das Lösemittel oberhalb des Lösemittelspiegels in den Behälter des Zwangsumlaufverdampfers zurückgeführt.

Das über die Leitung 11 aus dem Wärmetauscher 4 austretende Destillat wird in dem Kühler 12 unter Abziehen der Abluft über die Leitung 13 gekühlt. In dem Wasserabscheider 14 wird das Wasser von dem Lösemittel getrennt und das Lösemittel wird anschließend über die Leitung 15 dem Reintank zugeführt.

Das Destillat kann von dem Wärmetauscher 4 auch über die Leitung 17, den Wärmetauscher 16 und die Leitung 18 dem Kühler 12 zugeführt werden, wobei der Wärmetauscher 16 dem Erwärmen des zugeführten verschmutzten Lösemittels dient, das vor der Pumpe 6 in die Leitung 8 eingespeist wird.

Über die Leitung 19 wird der Vakuumpumpe zur Kühlung Destillat zugeführt. Das Destillat wird auf die Druckseite der Rotoren in einer Menge gesprüht, daß es vollständig verdampft.

Über das Ventil 20 kann die zugeführte Menge an verschmutztem Lösemittel gesteuert werden.

Nachdem sich in dem Behälter des Zwangsumlaufverdampfers 1 ein Lösemittelschlamm ausreichender Konzentration gebildet hat, werden die Ventile 21, 22 geschlossen und der Schlamm wird bei fortlaufenden Vakuumpumpe 3 unter zusätzlicher Beheizung bis auf den Restgehalt des Lösemittels ausdestilliert. Anschließend wird der Schlamm über das Ventil 23 abgelassen und der Entsorgung zugeführt.

Über die Leitung 24 wird dem Zwangsumlaufverdampfer Schleppluft zugeführt.

Die Destillation kann beispielsweise unter folgenden Bedingungen durchgeführt werden:

Die Vakuumpumpe hält in dem als Oberflächenverdampfer ausgebildeten Zwangsumlaufverdampfer 1 einen Druck von etwa 500 Millibar aufrecht, wobei die Temperatur auf etwa 100°C eingestellt wird.

Der Lösemitteldampf wird durch die Vakuumpumpe auf etwa 1000 - 1200 Millibar in dem Wärmetauscher 4 verdichtet, in dem eine Temperatur von 120°C eingestellt wird. Das aus dem Wärmetauscher 4 über die Leitung 17 austretende Destllat hat eine Temperatur von ebenfalls etwa 120°C. In dem Wärmetauscher 16 wird das mit etwa 20°C zugeführte verschmutzte Lösemittel auf etwa 100°C erwärmt. Das aus dem Wärmetauscher 16 austretende Destillat hat etwa noch eine Temperatur von 40°C.

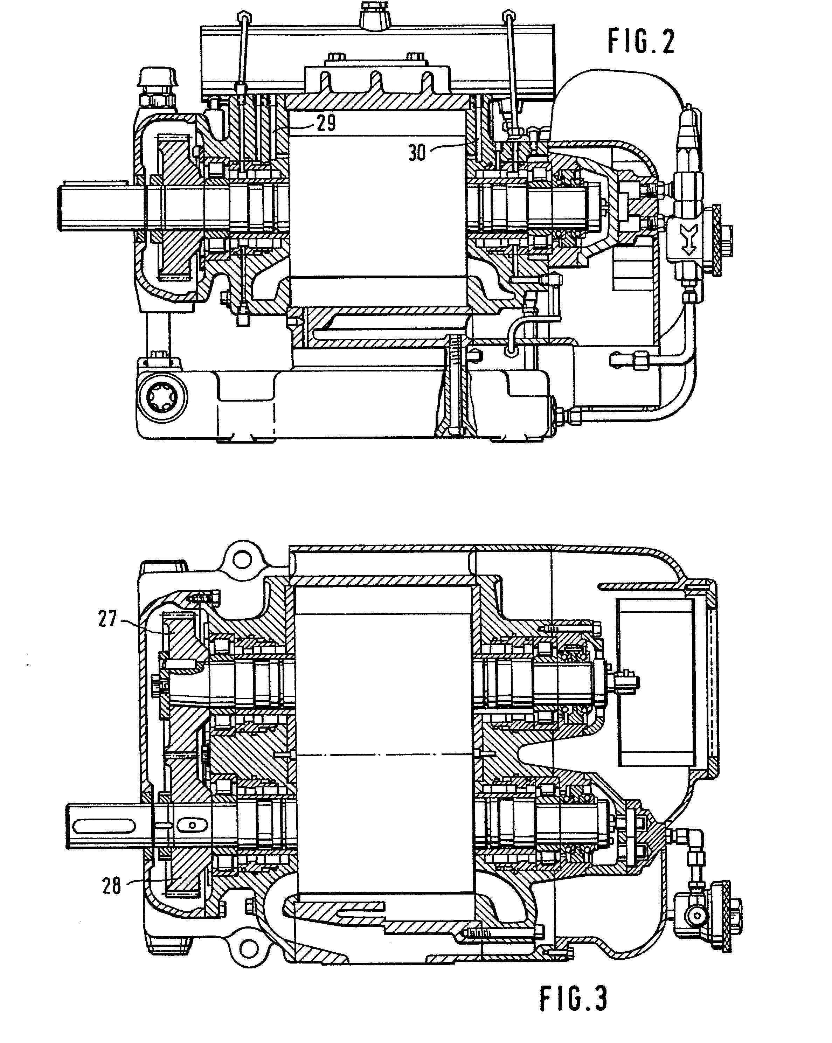

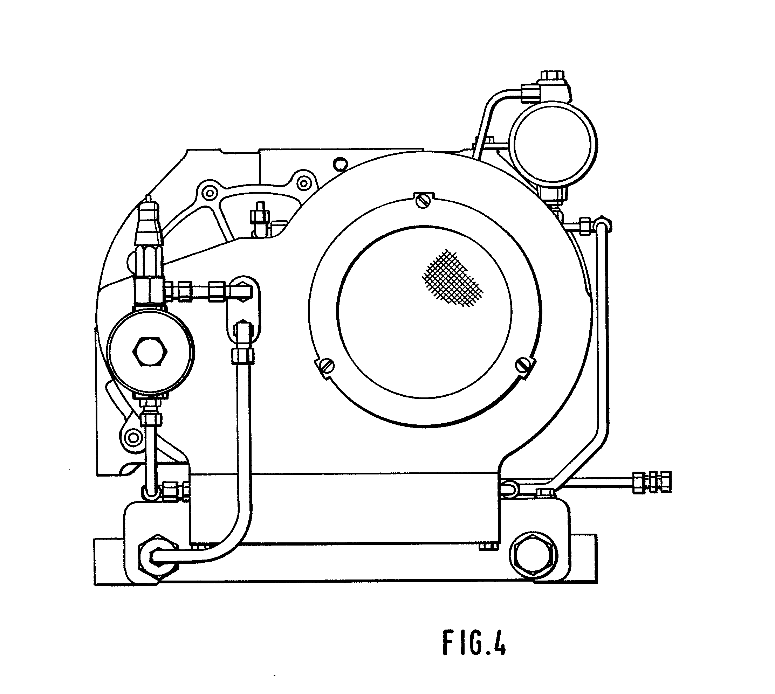

Der grundsätzliche Aufbau der Vakuumpumpe 3 ist aus den Fig. 2 bis 5 ersichtlich. Die Wellen der Rotoren 25, 26 sind durch die Zahnräder 27, 28 miteinander gekuppelt. Die Zahnform der Rotoren 25, 26 ist aus Fig. 5 ersichtlich.

Über die Leitungen 29, 30 (Fig. 2) wird der Druckseite der Rotoren 25, 26 zur Verdampfungskühlung Destillat zugeführt.

0154868
22.02.1985
79 580   G-die

Multimatic Maschinen GmbH & Co.,
4520 Melle

---

## Vorrichtung zum Destillieren verschmutzter Lösemittel oder dergleichen

---

## Patentansprüche:

1. Vorrichtung zum Destillieren verschmutzter Lösemittel und Lösemittelgemische, vorzugsweise verschmutzter Lösemittel von Chemischreinigungsvorrichtungen, mit einem Zwangsumlaufverdampfer, in den eine das verschmutzte und in einem Wärmetauscher erwärmte Lösemittel zuführende Leitung, die in ihrem Mündungsbereich mit einem Drosselventil versehen ist, mündet, und der in seinem oberen Bereich eine den Dampf über einen Brüden-Kompressor in einen Kondensator führende Leitung und in seinem unteren Bereich eine das Lösemittel abziehende und über eine Pumpe in den Wärmetauscher einspeisende Leitung aufweist, und mit einem Wasserabscheider und einer das verschmutzte Lösemittel zuführenden und einer das Destillat abführenden Leitung,

**dadurch gekennzeichnet,**

daß der Brüden-Kompressor aus einer trockenlaufenden
Vakuumpumpe (3) ohne Einlaß- und Auslaßventile mit interner
Verdichtung besteht, die zwei gleiche Rotoren (25, 26) mit
zahnförmigen Profilen, die berührungslos in einem Gehäuse
mit der Form zweier ineinandergreifender Zylinder gegeneinander abrollen, aufweist und die mit Einspritzdüsen (29,
30) versehen ist, die auf die Druckseiten der Rotoren zur
Kühlung Destillat in einer Menge spritzen, die noch während
der Kompression verdampft.

2. Vorrichtung nach Anspruch 1, dadurch gekennzeichnet, daß
der Kondensator (4) dadurch den Wärmetauscher bildet, daß
in diesem Rohrschlangen (5) für das verschmutzte Lösemittel
verlegt sind.

3. Vorrichtung nach Anspruch 1 oder 2, dadurch gekennzeichnet,
daß die das verschmutzte Lösemittel zuführende Leitung in
die Saugleitung (8) der das Lösemittel aus dem Zwangsumlaufverdampfer (1) abziehende Pumpe (6) mündet.

4. Vorrichtung nach einem der vorhergehenden Ansprüche,
dadurch gekennzeichnet, daß die das Lösemittel in den
Zwangsumlaufverdampfer (1) einsprühende Leitung (24)
oberhalb des Lösemittelspiegels mündet.

5. Vorrichtung nach Anspruch 4, dadurch gekennzeichnet, daß
die Leitung (10) tangential in den zyklonförmigen Behälter
des Zwangsumlaufverdampfers (1) mündet.

6.  Vorrichtung nach einem der vorhergehenden Ansprüche,
    dadurch gekennzeichnet, daß der Zwangsumlaufverdampfer (1)
    mit dem Kondensator durch eine Schleppluftleitung (24)
    verbunden ist.

7.  Vorrichtung nach einem der vorhergehenden Ansprüche,
    dadurch gekennzeichnet, daß das Kondensat über einen
    Wärmetauscher (16) mit dem zugeführten verschmutzten
    Lösemittel in wärmetauschende Verbindung gebracht wird.

8.  Vorrichtung nach einem der vorhergehenden Ansprüche,
    dadurch gekennzeichnet, daß der Behälter des Zwangsumlaufverdampfers (1) mit einer Zusatzheizung versehen ist.

FIG.1

0154868

FIG.2

FIG.3

FIG.4

0154868

FIG.5